Europäisches Patentamt

European Patent Office

Office européen des brevets

(19)

(11) **EP 1 376 362 A1**

(12) # DEMANDE DE BREVET EUROPEEN

(43) Date de publication:
**02.01.2004 Bulletin 2004/01**

(51) Int Cl.[7]: **G06F 11/25**

(21) Numéro de dépôt: **03291424.4**

(22) Date de dépôt: **13.06.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **19.06.2002 FR 0207553**

(71) Demandeur: **EUROCOPTER**
**13725 Marignane Cédex (FR)**

(72) Inventeur: **Longere, Jean-Yves**
**13120 Gardanne (FR)**

(74) Mandataire: **Renaud-Goud, Thierry et al**
**GPI & Associés**
**EuroParc de Pichaury**
**1330, rue Guillibert de la Lauzière**
**13855 Aix-en-Provence (FR)**

(54) **Dispositif d'aide à la localisation de défaillance d'un système complexe**

(57)  -Dispositif d'aide à la localisation de défaillance d'un système complexe.

- Le dispositif (1) comporte une base de données (2) stockant des règles d'aide au diagnostic, des moyens de détection (3) pour détecter une éventuelle défaillance du système complexe et pour fournir, lors d'une défaillance, des informations aidant à la détermination de l'origine de cette défaillance, une unité centrale (4) déterminant, pour toute défaillance détectée, à partir desdites règles d'aide au diagnostic et desdites informations, le ou les éléments du système complexe qui sont à l'origine de la défaillance, ainsi que pour chaque élément ainsi déterminé la probabilité correspondante qu'il soit à l'origine de cette défaillance, et des moyens de présentation (7) pour présenter à un opérateur, pour toute défaillance, le ou les éléments à l'origine de la défaillance avec la probabilité correspondante.

EP 1 376 362 A1

**Description**

La présente invention concerne un dispositif d'aide à la localisation de défaillance d'un système complexe.

Dans le cadre de la présente invention, on entend par système complexe, un système comportant une pluralité d'éléments reliés entre eux, tels que des composants électroniques et des calculateurs notamment, et présentant donc de très nombreuses interconnexions. De tels systèmes complexes existent dans des domaines d'activité très variés, comme par exemple dans l'industrie, dans l'automobile ou dans l'aviation. Ces systèmes complexes posent potentiellement des problèmes à un opérateur de maintenance pour localiser une défaillance observée par exemple par un utilisateur d'un tel système, c'est-à-dire pour déterminer le ou les éléments (en panne) qui sont à l'origine de cette défaillance.

Ces systèmes complexes disposent, en général, de tests intégrés destinés à détecter et localiser les défaillances. Mais des limitations techniques, et plus encore économiques, ne permettent pas à ces tests de couvrir l'intégralité des défaillances possibles du système. Ceci est particulièrement vrai pour la localisation d'un élément défaillant. Dans les systèmes complexes, le taux de localisation est au mieux de 90% (ce pourcentage exprime les cas de défaillance pour lesquels un test permet d'identifier sans ambiguïté l'élément défaillant). Il reste donc au moins 10% de cas pour lesquels il existe une ambiguïté sur la localisation de la défaillance.

Dans ces cas, l'opérateur de maintenance est amené à déposer des équipements (éléments) sans être sûr qu'ils soient effectivement défaillants. L'opérateur de maintenance dispose éventuellement de moyens permettant de confirmer ou d'infirmer le diagnostic (banc de test, procédure complémentaire, échanges successifs des éléments suspectés, aide en ligne du constructeur, ...), mais la mise en oeuvre de ces moyens induit des contraintes opérationnelles (disponibilité du banc de test sur le lieu de la panne par exemple) et de toute façon des surcoûts. En l'absence de ces moyens (ou en cas d'échec de ces moyens), l'opérateur de maintenance est contraint de renvoyer en réparation tous les éléments suspectés (dont les équipements non défaillants), ce qui engendre un important surcoût.

A titre d'illustration, il s'avère que les taux de dépose d'éléments dont la panne n'est finalement pas confirmée varient, dans les systèmes complexes modernes, entre 20 et 50%. Ces cas de non confirmation engendrent des surcoûts de maintenance qui sont sans doute, généralement, compris entre 15 et 30%.

La présente invention a pour objet de remédier à ces inconvénients. Elle concerne un dispositif d'aide à la localisation de défaillance d'un système complexe, permettant de lever toute ambiguïté concernant la localisation de toute défaillance détectée.

A cet effet, ledit dispositif est remarquable, selon l'invention, en ce qu'il comporte :

- au moins une base de données stockant des règles d'aide au diagnostic ;
- des moyens de détection, pour détecter une éventuelle défaillance fonctionnelle dudit système complexe et pour fournir, lors de la détection d'une défaillance, des informations relatives à l'origine de cette défaillance ;
- une unité centrale déterminant, pour toute défaillance détectée, au moins à partir desdites règles d'aide au diagnostic stockées dans ladite base de données et des informations fournies par lesdits moyens de détection, le ou les éléments du système complexe qui sont à l'origine de ladite défaillance, ainsi que pour chaque élément ainsi déterminé la probabilité correspondante qu'il soit à l'origine de cette défaillance ; et
- des moyens de présentation pour présenter à un opérateur, pour toute défaillance, le ou les éléments déterminés comme étant à l'origine de la défaillance avec à chaque fois la probabilité correspondante.

Ainsi, grâce à l'invention, pour chaque défaillance détectée, on connaît non seulement l'élément (ou les différents éléments) qui est suspecté être à l'origine de cette défaillance, mais également la probabilité correspondante qu'il soit effectivement à l'origine de cette défaillance. Ceci apporte une aide précieuse à un opérateur de maintenance du système complexe pour savoir s'il doit déposer ou non un élément susceptible d'être en panne.

De façon avantageuse, ladite base de données stocke au moins certaines des règles suivantes :

- des données de fiabilité relatives à différents éléments dudit système complexe ;
- des diagnostics préétablis qui associent directement un résultat de localisation d'une défaillance au résultat d'au moins un test particulier, mis en oeuvre par les moyens de détection ; et
- des règles de sélection qui sont imposées à l'unité centrale.

En outre, avantageusement, lesdits moyens de détection comportent :

- des moyens de test qui sont intégrés dans ledit système complexe ; et/ou
- au moins un moyen de test interactif ; et/ou
- au moins un moyen permettant à un opérateur d'entrer dans ledit dispositif des informations relatives à une défaillance et à son origine.

Par ailleurs, de façon avantageuse, ladite unité centrale détermine le ou les éléments à l'origine d'une défaillance avec à chaque fois la probabilité correspondante :

- en utilisant au moins un diagnostic préétabli du type précité ; et/ou
- en calculant ladite probabilité à l'aide du rapport entre la somme des taux de défaillance de l'ensemble des défaillances couvertes par un test dans ledit élément et la somme des taux de défaillance de l'ensemble des défaillances couvertes par ce test dans tout ledit système complexe.

En outre, dans un mode de réalisation préféré, ladite unité centrale détermine, pour un élément C à l'origine d'une défaillance, la probabilité correspondante à l'aide du rapport $\Sigma C/\Sigma total$,
dans lequel :

- $\Sigma C$ est une somme caractéristique de l'élément C et correspond à la somme des produits de défaillance des différents composants dudit élément C ;
- le produit de défaillance d'un composant particulier correspond au produit de paramètres de résultat des différents tests surveillant l'élément dont fait partie ledit composant particulier, le paramètre de résultat d'un test étant égal :

  . à 1, si le test ne surveille pas ce composant ;
  . à 0, si le test surveille ce composant, mais ne détecte aucune panne ;
  . au taux de défaillance dudit composant, si le test surveille ce composant et détecte une panne ; et

- $\Sigma total$ correspond à la somme des différentes sommes caractéristiques de tous les éléments du système complexe qui sont surveillés par ces tests.

En outre, avantageusement, ledit dispositif comporte, de plus, un moyen d'enregistrement pour enregistrer, lors de la détection d'une défaillance, des paramètres opérationnels disponibles sur le système complexe, et ladite unité centrale utilise également ces paramètres opérationnels pour déterminer le ou les éléments à l'origine de la défaillance, ainsi que la probabilité correspondante.
Par ailleurs, lesdits moyens de présentation présentent sur un support lisible (écran de visualisation ou support imprimé) au moins l'une des présentations suivantes :

- une liste d'éléments du système complexe avec la probabilité associée d'être à l'origine d'une défaillance ;
- une illustration des différentes probabilités selon un jeu de couleurs différentes ; et
- un schéma synoptique du système complexe avec une mise en évidence de la probabilité de différents éléments de ce dernier.

En outre, avantageusement, lesdits moyens de présentation présentent, de plus, sur ledit support lisible des informations complémentaires relatives à la localisation de défaillance.
Par ailleurs, le dispositif conforme à l'invention comporte de plus :

- un moyen de dialogue permettant à un opérateur de dialoguer avec ledit dispositif ; et/ou
- un moyen de mise à jour permettant à un opérateur de mettre à jour au moins l'un des moyens suivants dudit dispositif : la base de données et l'unité centrale ; et/ou
- des moyens de stockage pour stocker les informations issues des moyens de détection ; et/ou
- des moyens de stockage pour stocker des informations auxiliaires qui sont susceptibles d'être présentées à un opérateur par lesdits moyens de présentation ; et/ou
- des moyens pour classer chronologiquement les résultats issus de l'unité centrale.

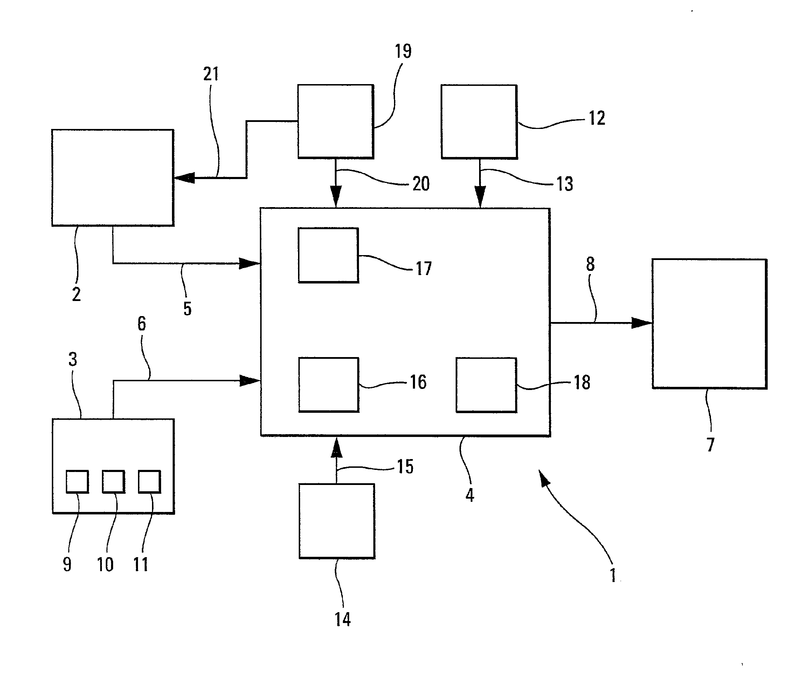

L'unique figure du dessin annexé fera bien comprendre comment l'invention peut être réalisée. Cette figure est le schéma synoptique d'un dispositif conforme à l'invention d'aide à la localisation de défaillance d'un système complexe.
Le dispositif 1 conforme à l'invention et représenté schématiquement sur la figure est destiné à aider à la détection et à la localisation des défaillances (pannes) d'un système complexe non représenté, notamment un aéronef, par exemple un hélicoptère. Un tel système complexe comporte une pluralité d'éléments (composants électroniques, mécaniques, ...) reliés entre eux, et une défaillance dudit système complexe est généralement due à un dysfonctionnement (ou une panne) d'un desdits éléments, qui doit alors être déposé pour être réparé ou remplacé.
Selon l'invention, ledit dispositif 1 comporte :

- au moins une base de données 2, de type usuel, stockant des règles d'aide au diagnostic, précisées ci-dessous ;
- des moyens de détection 3, pour détecter une éventuelle défaillance fonctionnelle dudit système complexe et pour fournir, lors de la détection d'une défaillance, des informations relatives à l'origine de cette défaillance ;
- une unité centrale 4 reliée par des liaisons 5 et 6 respectivement à ladite base de données 2 et auxdits moyens de détection 3 et déterminant, pour toute défaillance détectée, au moins à partir desdites règles d'aide au diagnostic stockées dans ladite base de données 2 et des informations fournies par lesdits moyens de détection 3, le ou les éléments du système complexe qui sont à l'origine de cette défaillance, ainsi que pour chaque élément ainsi déterminé la probabilité correspondante qu'il soit à l'origine de cette défaillance ; et
- des moyens de présentation 7 qui comprennent par exemple un écran de visualisation et/ou une imprimante, qui sont reliés par une liaison 8 à l'unité centrale 4 et qui ont pour objet de présenter à un opérateur, pour toute défaillance, le ou les éléments déterminés comme étant à l'origine de la défaillance avec à chaque fois la probabilité correspondante.

Ainsi, grâce audit dispositif 1 conforme à l'invention, on connaît, pour chaque défaillance détectée, non seulement le ou les différents éléments qui sont considérés comme étant à l'origine de cette défaillance, mais également leur probabilité d'être à l'origine de cette défaillance. Ainsi, pour une défaillance particulière, on peut par exemple obtenir l'information selon laquelle un élément A a 90% de chance d'être à l'origine de la défaillance et donc d'être en panne, un élément B a 7% de chance et un élément C a 3% de chance. Ceci apporte une aide précieuse à un opérateur de maintenance du système complexe, pour savoir s'il doit déposer ou non un élément susceptible d'être en panne (par exemple, dépose nécessaire pour l'élément A de l'exemple précédent).

Les moyens de détection 3 pour détecter les défaillances fonctionnelles du système complexe surveillé, peuvent être formés pour mettre en oeuvre des techniques de détection usuelles.

Dans un mode de réalisation particulier, lesdits moyens de détection 3 comportent toutefois :

- un moyen 9, tel qu'un clavier alphanumérique par exemple, permettant à un opérateur d'entrer dans ledit dispositif 1 des informations relatives à une défaillance et à son origine, en particulier en faisant une description du symptôme observé (éventuellement en utilisant une liste codifiée de symptômes possibles) ; et/ou
- des moyens de test 10 qui sont intégrés dans ledit système complexe. Ces moyens 10 de test peuvent mettre en oeuvre des tests matériels qui contrôlent l'intégrité matérielle du système complexe et/ou des tests fonctionnels qui vérifient l'intégrité des fonctions réalisées par ledit système. Ils peuvent être actifs pendant tout le fonctionnement du système ou uniquement lors d'une ou plusieurs phases spécifiques de test ; et/ou
- un moyen de test interactif 11 (c'est-à-dire demandant une action d'un opérateur de maintenance) pour affiner le diagnostic.

Par ailleurs, ladite base de données 2 qui contient les informations nécessaires à l'unité centrale 4, pour établir les probabilités de panne des éléments à partir des résultats des tests réalisés par les moyens de détection 3, stocke au moins certaines des règles suivantes :

- des données de fiabilité relatives à différents éléments dudit système complexe. Ces données de fiabilité peuvent être issues de recueils de fiabilité ("MIL HDBK 217F" pour les composants électroniques par exemple). Elles peuvent également être tirées d'un retour d'expérience de la part du constructeur ou de l'utilisateur du système complexe. On peut également utiliser des informations combinant les deux sources précédentes ;
- des règles de sélection qui sont imposées à l'unité centrale 4 pour le choix dans l'établissement des stratégies de diagnostic ; et
- des diagnostics préétablis qui associent directement un résultat de localisation au résultat d'au moins un test mis en oeuvre par les moyens de détection 3, c'est-à-dire qu'à un résultat de test est associée la liste des équipements (éléments) suspectés avec la probabilité d'être effectivement défaillants. Ces diagnostics préétablis sont basés sur des études, des retours d'expériences et/ou des avis d'expertise.

Dans ce dernier cas, ladite unité centrale 4 détermine donc le ou les éléments à l'origine d'une défaillance avec à chaque fois la probabilité correspondante, en utilisant au moins un tel diagnostic préétabli.

Cette dernière procédure peut, par exemple, être utilisée lorsqu'aucune ambiguïté de localisation ne subsiste suite au test, notamment quand l'ensemble des modes de panne surveillés par le test sont situés sur le même élément. Il est, dans ce cas, plus rapide d'associer une probabilité de 100% de défaillance à l'élément incriminé, plutôt que de réaliser un calcul pour tous les éléments.

Le diagnostic peut également être issu d'une exploitation statistique de retours d'expériences. Par exemple, après l'observation sur les résultats d'un test particulier que l'origine d'une panne est due dans 80% des cas à un élément A et 20% à un élément B, on restituera toujours ces proportions sous la forme de probabilité de panne lorsque ce test particulier sera positif. Le diagnostic peut également être élaboré directement par avis d'expert. On peut enfin utiliser des techniques bayésiennes pour mixer le retour d'expériences avec des avis d'experts et/ou un prévisionnel formel.

De préférence, les traitements mis en oeuvre par l'unité centrale 4 utilisent les résultats de plusieurs tests de sorte que des éléments suspectés par un premier test positif pourront, par exemple, être disculpés par un ou plusieurs autres tests négatifs.

Dans un premier mode de réalisation simplifié, l'unité centrale 4 calcule la probabilité de défaillance d'un élément à partir du rapport entre la somme des taux de défaillance [un taux de défaillance est la probabilité qu'un élément tombe en panne pendant un temps donné, par exemple pendant une heure (h)] de l'ensemble des défaillances couvertes par un test particulier dans cet élément et la somme des taux de défaillance de l'ensemble des défaillances couvertes par ce test particulier dans tout le système complexe.

La somme des taux de défaillance des modes de défaillance couverts par le test peut s'établir sur la base des fiabilités des composants des différents éléments. Il peut également s'agir d'une valeur approchée donnant pour un test la proportion couverte par le test de chaque élément du système. En multipliant ces proportions par les fiabilités respectives, on obtient alors les numérateurs et dénominateurs du rapport précité.

Ainsi, à titre d'illustration, lorsque deux éléments A et B sont suspectés, on peut déterminer les probabilités pA et pB respectives, à partir des expressions suivantes :

$$
\begin{cases}
pA = \dfrac{\Sigma A}{\Sigma A + \Sigma B} \\[3mm]
pB = \dfrac{\Sigma B}{\Sigma A + \Sigma B}
\end{cases}
$$

dans lesquelles :

- $\Sigma A$ représente la somme des fiabilités des différents composants testés dans l'élément A, la fiabilité étant exprimée en taux de défaillance ;
- $\Sigma B$ représente la somme des fiabilités des différents composants testés dans l'élément B ; et
- $\Sigma A + \Sigma B$ représentent la somme des fiabilités des différents composants testés dans tout le système complexe.

Par ailleurs, dans un second mode de réalisation préféré, ladite unité centrale 4 détermine, pour un élément C à l'origine d'une défaillance, la probabilité correspondante pC à l'aide du rapport $\Sigma C/\Sigma total$,
dans lequel :

- $\Sigma C$ est une somme caractéristique de l'élément C et correspond à la somme des produits de défaillance des différents composants dudit élément C ;
- le produit de défaillance d'un composant particulier correspond au produit de paramètres de résultat des différents tests surveillant l'élément dont fait partie ledit composant particulier, le paramètre de résultat d'un test étant égal :

  . à 1, si le test ne surveille pas ce composant ;
  . à 0, si le test surveille ce composant, mais ne détecte aucune panne ;
  . au taux de défaillance dudit composant, si le test surveille ce composant et détecte une panne ; et

- $\Sigma total$ correspond à la somme des différentes sommes caractéristiques de tous les éléments du système complexe qui sont surveillés par ces tests.

On illustre ce second mode de réalisation à partir de l'exemple suivant qui comporte deux éléments (équipements) C et D, chacun d'eux comprenant quatre composants : C11 à C14 pour l'élément C et C21 à C24 pour l'élément D. Les différents tests sont notés T1, T2, T3, ...

Pour ces tests, on prévoit des symboles "X", "0" et "1" tels que :

- pour "X", le test ne surveille pas le composant correspondant ;
- pour "0", le test surveille le composant, mais ne détecte aucune panne ;
- pour "1", le test surveille le composant et détecte une panne.

| Equipements | | T1 | T2 | ... | T3 | Taux de défaillance | Produit de défaillance |
|---|---|---|---|---|---|---|---|
| C | C11 | X | 1 | | X | $1.10^{-6}$/h | $1.10^{-6}$/h |
| | C12 | 0 | 1 | | 1 | $3.10^{-6}$/h | 0 |
| | C13 | 0 | X | | X | $2.10^{-6}$/h | 0 |
| | C14 | 0 | X | | 1 | $4.10^{-6}$/h | 0 |
| $\Sigma$C | | | | | | | $1.10^{-6}$/h |
| D | C21 | 0 | X | | 1 | $2.10^{-6}$/h | 0 |
| | C22 | 0 | X | | X | $3.10^{-6}$/h | 0 |
| | C23 | X | X | | 1 | $2.10^{-6}$/h | $2.10^{-6}$/h |
| | C24 | 0 | X | | X | $4.10^{-6}$/h | 0 |
| $\Sigma$D | | | | | | | $2.10^{-6}$/h |

$\Sigma$C et $\Sigma$D, qui sont les sommes des produits de défaillance respectivement de C11 à C14 et de C21 à C24, vérifient donc :

$$\begin{cases} \Sigma C = 1.10^{-6} / h \\ \Sigma D = 2.10^{-6} / h \end{cases}$$

De plus, $\Sigma$total = $\Sigma$C + $\Sigma$D = $3.10^{-6}$/h.

On obtient donc les probabilités pC et pD respectives des éléments C et D, à partir des expressions suivantes :

$$\begin{cases} pC = \dfrac{\Sigma C}{\Sigma total} = \dfrac{1}{3} \\ pD = \dfrac{\Sigma D}{\Sigma total} = \dfrac{2}{3} \end{cases}$$

Par conséquent, l'élément suspecté en premier est l'élément D.

On notera que le recensement des pannes et le recensement des taux de défaillance ont été préalablement mémorisés dans des organes spécifiques du dispositif.

Avec ce second mode de réalisation, on prévoit une meilleure performance de localisation des pannes, une réduction des ambiguïtés et une réduction des taux de dépose non confirmée de 15 à 20%.

Par ailleurs, le dispositif 1 comporte, de plus, un moyen d'enregistrement 12 pour enregistrer, lors de la détection d'une défaillance, des paramètres opérationnels disponibles sur le système complexe. L'unité centrale 4 qui est reliée par une liaison 13 à ce moyen d'enregistrement 12 utilise également lesdits paramètres opérationnels pour déterminer le ou les éléments à l'origine de la défaillance, ainsi que la probabilité correspondante.

Ces paramètres opérationnels peuvent donc aider à lever une éventuelle ambiguïté concernant la localisation d'une défaillance. Par exemple, en cas de dissemblance de deux valeurs d'altitude sur un aéronef provenant de deux sources (éléments) différentes, le moyen d'enregistrement 12 enregistre, au moment de l'observation de cette dissemblance, ces deux valeurs d'altitude. La vraisemblance de chacune des deux valeurs dans la phase de vol considérée peut alors être utilisée pour lever l'ambiguïté de panne entre les deux éléments. On peut également envisager que cette opération soit automatique en intégrant une troisième source d'information, éventuellement indirecte, fournissant par exemple une vitesse, notamment s'il est impossible à l'aéronef d'être à certaines vitesses au-dessous de l'altitude en question.

Par ailleurs, lesdits moyens de présentation 7 présentent sur un support lisible (écran, support papier, ...) au moins l'une des présentations suivantes :

- une liste des différents éléments du système complexe avec la probabilité associée d'être à l'origine d'une défaillance (éventuellement en limitant cette liste aux éléments dont la probabilité est non nulle) ;
- une illustration des différentes probabilités selon un jeu de couleurs (par exemple, rouge pour une probabilité supérieure à 90%, orange pour une probabilité supérieure à 50% et inférieure ou égale à 90%, et jaune pour une probabilité inférieure ou égale à 50%) ; et
- un schéma synoptique (éventuellement limité à la seule fonction défectueuse ou aux seuls éléments suspectés) avec la probabilité de panne (ou le code couleur) insérée dans chaque élément.

Lesdits moyens de présentation 7 présentent, de plus, sur ledit support lisible des informations complémentaires relatives à la localisation de défaillance, telles que :

- le rappel des tests positifs à l'origine du diagnostic ;
- les données et les règles de sélection utilisées pour le diagnostic ; et
- des conseils de maintenance, fonction du diagnostic (éventuellement en se couplant à une documentation de maintenance électronique).

Par ailleurs, le dispositif 1 conforme à l'invention peut comporter, de plus, un moyen de dialogue 14 permettant à un opérateur de dialoguer avec ledit dispositif 1, et en particulier avec l'unité centrale 4 (liaison 15), pour par exemple :

- recaler les probabilités de défaillance, après un essai de remplacement ou la mise en oeuvre de tests complémentaires (par exemple lorsque trois éléments sont suspectés et que le remplacement d'un premier élément n'a rien donné, demander une ré-affectation des probabilités sur les deux éléments restants suspectés) ; ou
- intégrer des contraintes de maintenance, éventuellement en se couplant à des outils de GMAO (Gestion de Maintenance Assistée par Ordinateur), par exemple pour prendre en compte une information de rupture de stock pour l'un des éléments suspectés.

En outre, le dispositif 1 comporte également :

- des moyens de stockage 16 pour stocker les informations issues des moyens de détection 3. La maintenance n'ayant pas nécessairement à être effectuée immédiatement après l'observation de la défaillance (par exemple, dans le cas d'une application embarquée, pour laquelle la maintenance s'effectue une fois de retour sur site), il peut être préférable de différer le diagnostic. Dans ce dernier cas, lesdits moyens de stockage 16 assurent le stockage des résultats de tests de détection ; et
- des moyens de stockage 17 stockant des informations auxiliaires qui sont susceptibles d'être présentées à un opérateur de maintenance par lesdits moyens de présentation 7.

L'objet desdits moyens de stockage 17 est donc d'ajouter des informations auxiliaires à l'information de probabilité, pour aider l'opérateur de maintenance dans ses choix de déposes. Ces informations auxiliaires peuvent être :

- des contraintes de déposes (accessibilité, importance de test de vérification d'intégrité, risque de détérioration) ;
- des contraintes de remontage (absence ou nécessité de réglage);
- des contraintes opérationnelles (absence de tel type de personnel qualifié) ;
- des disponibilités de stocks ; et
- l'existence de procédure de test complémentaires (valises, bancs de test).

Ces informations auxiliaires peuvent être préprogrammées par le constructeur et, éventuellement, être enrichies ou personnalisées par l'utilisateur. Certaines règles permettent en particulier d'amender la stratégie de remise en état, sur la base de ces informations, en modifiant par exemple l'ordre de dépose conseillé. Ces amendements peuvent être intégrés a priori par le constructeur (sous forme, par exemple, de facteurs correctifs intégrés dans les probabilités de panne ou plus exactement dans l'ordre suggéré de dépose) et, éventuellement, être corrigés par l'utilisateur du dispositif 1.

Par ailleurs, le dispositif 1 comporte également des moyens 18 pour classer chronologiquement les résultats issus de l'unité centrale 4, à partir des symptômes décrits par l'opérateur et/ou des résultats des tests de détection (moyens de détection 3). L'usage de ces moyens 18 peut notamment permettre :

- à l'utilisateur du système complexe d'optimiser ses diagnostics, en associant régulièrement la localisation réelle de la panne aux résultats des tests. Il peut ainsi bénéficier de l'expérience acquise pour des problèmes similaires lui ayant déjà posé des problèmes de localisation ;

- d'établir des statistiques sur le scénario de tests et de diagnostics observé pour, par exemple, orienter des optimisations sur les scénarios les plus fréquents ou les plus gênants ; et
- permettre au constructeur d'améliorer le dispositif 1 en corrélant les tests et la localisation de la panne.

Ledit dispositif 1 peut comporter, de plus, un moyen de mise à jour 19 permettant à un opérateur de mettre à jour au moins l'un des moyens suivants dudit dispositif : l'unité centrale (liaison 20) et la base de données 2 (liaison 21).
Plusieurs types de mises à jour peuvent être envisagés :

- intégration de nouveaux diagnostics préétablis sur l'expérience acquise en exploitation ;
- intégration dans le calcul de probabilité de données réellement observées avec des règles du genre "dans 90% des cas où l'élément C a été signalé en panne, il était effectivement en panne" ;
- mise à jour des bases de données prévisionnelles d'occurrence des modes de défaillance, par retour d'expériences sur la fiabilité ;
- substitution de données observées à ces données prévisionnelles ;
- fusion des données observées et prévisionnelles (par exemple par des techniques bayésiennes) ; et
- intégration de nouvelles données prévisionnelles (par exemple suite à la modification des normes de recueil de fiabilité).

**Revendications**

1. Dispositif d'aide à la localisation de défaillance d'un système complexe comprenant une pluralité d'éléments reliés entre eux, ledit dispositif comportant :

   - des moyens de détection (3) pour détecter une éventuelle défaillance fonctionnelle dudit système complexe et pour fournir, lors de la détection d'une défaillance, des informations relatives à l'origine de cette défaillance ;
   - une unité centrale (4) déterminant, pour toute défaillance détectée, au moins à partir des informations fournies par lesdits moyens de détection (3), le ou les éléments du système complexe qui sont à l'origine de ladite défaillance ; et
   - des moyens de présentation (7) pour présenter à un opérateur, pour toute défaillance, le ou les éléments déterminés comme étant à l'origine de la défaillance,

   **caractérisé en ce que** :

   - ledit dispositif (1) comporte, de plus, au moins une base de données (2) stockant des règles d'aide au diagnostic ;
   - ladite unité centrale (4) détermine le ou les éléments du système complexe qui sont à l'origine d'une défaillance, de plus à partir desdites règles d'aide au diagnostic stockées dans ladite base de données (2), et ladite unité centrale (4) détermine également, pour chaque élément ainsi déterminé comme étant à l'origine d'une défaillance, la probabilité correspondante qu'il soit à l'origine de cette défaillance ; et
   - lesdits moyens de présentation (7) présentent également, pour chaque élément présenté comme étant à l'origine d'une défaillance, la probabilité correspondante pour qu'il soit à l'origine de la défaillance.

2. Dispositif selon la revendication 1,
   **caractérisé en ce que** ladite base de données (2) stocke au moins certaines des règles suivantes :

   - des données de fiabilité relatives à différents éléments dudit système complexe ;
   - des diagnostics préétablis qui associent directement un résultat de localisation d'une défaillance au résultat d'au moins un test particulier, mis en oeuvre par les moyens de détection (3) ; et
   - des règles de sélection qui sont imposées à l'unité centrale (4).

3. Dispositif selon l'une des revendications 1 et 2,
   **caractérisé en ce que** lesdits moyens de détection (3) comportent des moyens de test (10) qui sont intégrés dans ledit système complexe.

4. Dispositif selon l'une quelconque des revendications précédentes,
   **caractérisé en ce que** lesdits moyens de détection (3) comportent au moins un moyen de test interactif (11).

**5.** Dispositif selon l'une quelconque des revendications précédentes,
**caractérisé en ce que** lesdits moyens de détection (3) comportent au moins un moyen (9) permettant à un opérateur d'entrer dans ledit dispositif (1) des informations relatives à une défaillance et à son origine.

**6.** Dispositif selon l'une quelconque des revendications précédentes,
**caractérisé en ce que** ladite unité centrale (4) détermine le ou les éléments à l'origine d'une défaillance avec à chaque fois la probabilité correspondante, en utilisant au moins un diagnostic préétabli.

**7.** Dispositif selon l'une quelconque des revendications 1 à 6,
**caractérisé en ce que** ladite unité centrale (4) détermine, pour un élément à l'origine d'une défaillance, la probabilité correspondante à l'aide du rapport entre la somme des taux de défaillance de l'ensemble des défaillances couvertes par un test dans ledit élément et la somme des taux de défaillance de l'ensemble des défaillances couvertes par ce test dans tout ledit système complexe.

**8.** Dispositif selon l'une quelconque des revendications 1 à 6,
**caractérisé en ce que** ladite unité centrale (4) détermine, pour un élément C à l'origine d'une défaillance, la probabilité correspondante à l'aide du rapport $\Sigma C/\Sigma total$,
dans lequel :

- $\Sigma C$ est une somme caractéristique de l'élément C et correspond à la somme des produits de défaillance des différents composants dudit élément C ;
- le produit de défaillance d'un composant particulier correspond au produit de paramètres de résultat des différents tests surveillant l'élément dont fait partie ledit composant particulier, le paramètre de résultat d'un test étant égal :

  . à 1, si le test ne surveille pas ce composant ;
  . à 0, si le test surveille ce composant, mais ne détecte aucune panne ;
  . au taux de défaillance dudit composant, si le test surveille ce composant et détecte une panne ; et

- $\Sigma total$ correspond à la somme des différentes sommes caractéristiques de tous les éléments du système complexe qui sont surveillés par ces tests.

**9.** Dispositif selon l'une quelconque des revendications précédentes,
**caractérisé en ce qu'**il comporte, de plus, un moyen d'enregistrement (12) pour enregistrer, lors de la détection d'une défaillance, des paramètres opérationnels disponibles sur le système complexe, et **en ce que** ladite unité centrale (4) utilise également lesdits paramètres opérationnels pour déterminer le ou les éléments à l'origine de la défaillance, ainsi que la probabilité correspondante.

**10.** Dispositif selon l'une quelconque des revendications précédentes,
**caractérisé en ce que** lesdits moyens de présentation (7) présentent sur un support lisible, au moins l'une des présentations suivantes :

- une liste d'éléments du système complexe avec la probabilité associée d'être à l'origine d'une défaillance ;
- une illustration des différentes probabilités selon un jeu de couleurs différentes ; et
- un schéma synoptique du système complexe avec une mise en évidence de la probabilité de différents éléments de ce dernier.

**11.** Dispositif selon la revendication 10,
**caractérisé en ce que** lesdits moyens de présentation (7) présentent, de plus, sur ledit support lisible des informations complémentaires relatives à la localisation de défaillance.

**12.** Dispositif selon l'une quelconque des revendications précédentes,
**caractérisé en ce qu'**il comporte, de plus, un moyen de dialogue (14) permettant à un opérateur de dialoguer avec ledit dispositif (1).

**13.** Dispositif selon l'une quelconque des revendications précédentes,
**caractérisé en ce qu'**il comporte, de plus, un moyen de mise à jour (19) permettant à un opérateur de mettre à jour au moins l'un des moyens suivants dudit dispositif (1) : la base de données (2) et l'unité centrale (4).

**14.** Dispositif selon l'une quelconque des revendications précédentes,
**caractérisé en ce qu'**il comporte, de plus, des moyens de stockage (16) pour stocker les informations issues des moyens de détection (3).

**15.** Dispositif selon l'une quelconque des revendications précédentes,
**caractérisé en ce qu'**il comporte, de plus, des moyens de stockage (17) pour stocker des informations auxiliaires qui sont susceptibles d'être présentées à un opérateur par lesdits moyens de présentation (7).

**16.** Dispositif selon l'une quelconque des revendications précédentes,
**caractérisé en ce qu'**il comporte, de plus, des moyens (18) pour classer chronologiquement les résultats issus de l'unité centrale (4).

**17.** Système complexe,
**caractérisé en ce qu'**il comporte un dispositif (1) d'aide à la localisation de défaillance, tel que celui spécifié sous l'une quelconque des revendications 1 à 16.

**EP 1 376 362 A1**

Office européen
des brevets

**RAPPORT DE RECHERCHE EUROPEENNE**

Numéro de la demande

EP 03 29 1424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | BENIAMINY I ET AL: "Experience in diagnosing a remote, tele-controlled unit using the AITEST expert system" TEST CONFERENCE, 1993. PROCEEDINGS., INTERNATIONAL BALTIMORE, MD, USA 17-21 OCT. 1993, NEW YORK, NY, USA,IEEE, 17 octobre 1993 (1993-10-17), pages 37-44, XP010148272 ISBN: 0-7803-1430-1 | 1-6,9-17 | G06F11/25 |
| Y | * abrégé * * page 38, colonne de gauche, ligne 1 - colonne de droite, ligne 6 * * page 38, colonne de droite, ligne 34 - page 39, colonne de gauche, ligne 2 * * page 39, colonne de droite, ligne 12 - page 41, colonne de droite, ligne 28 * * page 43, colonne de droite, ligne 4 - ligne 7 * * figures 1,2,4,6 * | 7,8 | |
| | --- | | **DOMAINES TECHNIQUES RECHERCHES (Int.Cl.7)** |
| Y | COOPER L J ET AL: "REASONING FROM UNCERTAIN DATA: A BIT ENHANCEMENT" AUTOMATIC TESTING IN THE NEXT DECADE AND IN THE 21ST. CENTURY. PHILADELPHIA, SEPT. 25 - 28, 1989, PROCEEDINGS OF THE INTERNATIONAL AUTOMATIC TESTING CONFERENCE, NEW YORK, IEEE, US, vol. CONF. 25, 25 septembre 1989 (1989-09-25), pages 146-149, XP000078705 * page 147, colonne de droite * * page 148, colonne de gauche, ligne 1 - colonne de droite, ligne 23 * * figures 1,2 * --- -/-- | 7,8 | G06F |

Le présent rapport a été établi pour toutes les revendications

| Lieu de la recherche | Date d'achèvement de la recherche | Examinateur |
|---|---|---|
| LA HAYE | 28 août 2003 | Sabbah, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

**EP 1 376 362 A1**

Office européen
des brevets

**RAPPORT DE RECHERCHE EUROPEENNE**

Numéro de la demande

EP 03 29 1424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | SHEPPARD J W ET AL: "A neural network for evaluating diagnostic evidence" AEROSPACE AND ELECTRONICS CONFERENCE, 1991. NAECON 1991., PROCEEDINGS OF THE IEEE 1991 NATIONAL DAYTON, OH, USA 20-24 MAY 1991, NEW YORK, NY, USA,IEEE, US, 20 mai 1991 (1991-05-20), pages 717-723, XP010048214 ISBN: 0-7803-0085-8 * page 719, colonne de droite, ligne 9 - ligne 17 *<br>---<br> | 7,8 | |
| A | NOLAN M ET AL: "Re-engineering legacy tech manual's troubleshooting procedures into smart model-based diagnostics" AUTOTESTCON, 97. 1997 IEEE AUTOTESTCON PROCEEDINGS ANAHEIM, CA, USA 22-25 SEPT. 1997, NEW YORK, NY, USA,IEEE, US, 22 septembre 1997 (1997-09-22), pages 1-7, XP010252988 ISBN: 0-7803-4162-7 document entier<br>-----<br> | 1-17 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 28 août 2003 | Sabbah, Y |